# EUROPÄISCHE PATENTSCHRIFT

(11) **EP 1 696 540 B1**
(45) Veröffentlichungstag und Bekanntmachung des Hinweises auf die Patenterteilung: **02.04.2008**
(21) Anmeldenummer: 05027275.6
(22) Anmeldetag: 14.12.2005
(51) Int. Cl.: H02K 41/03

(54) **Drehverbindung**
Revolving joint
Joint tournant

(30) Priorität: 04.02.2005 DE 102005005144
(43) Veröffentlichungstag der Anmeldung: 30.08.2006
(73) Patentinhaber: Schaeffler KG, 91074 Herzogenaurach (DE)
(72) Erfinder: Oetjen, Jürgen, 91074 Herzogenaurach (DE)

(56) Entgegenhaltungen:
- EP-A- 0 945 613
- EP-A- 1 593 865
- DE-A1- 19 856 647
- DE-U1- 20 111 648
- DE-U1- 20 115 350
- US-A- 5 990 652

## Beschreibung

### Anwendungsgebiet der Erfindung

Die Erfindung betrifft eine Drehverbindung, bestehend aus zwei konzentrisch ineinander angeordneten Laufringen, wobei zu deren aktiver Drehung einer der beiden Laufringe mit einer elektromotorischen Antriebseinheit verbunden ist.

### Hintergrund der Erfindung

Drehverbindungen sind als Wälzlager- Drehverbindungen bereits seit langem bekannt. Nach dem Fachbuch "Die Wälzlagerpraxis", Vereinigte Fachverlage GmbH, Mainz, 1995 werden solche Wälzlager- Drehverbindungen als Schwenklager für die Abstützung von Baggern, Kränen oder im Fahrzeugbau für Gelenkbusse bzw. Straßenbahnen eingesetzt, d.h., in Einsatzgebieten, bei denen bei begrenztem Bauraum hohe Belastungen auftreten und die eine hohe Betriebssicherheit verlangen. Diese Drehverbindungen können Axialkräfte, Radialkräfte und Kippmomente aufnehmen.

In diesem Zusammenhang ist es auch bekannt, dass neben dem Zweck der drehbaren Verbindung zweier Maschinen- oder Anlagenteile zur aktiven Drehung eines der beiden Maschinen- oder Anlagenteile ein Antriebsdrehmoment auf eines der Maschinen- bzw. Anlagenteile zur übertragen ist, wobei dieses Antriebsmoment meist durch einen elektrischen Antrieb bereitgestellt wird.

Im Prospekt "Antriebseinheiten, Lieferprogramm, 14/2002-IP-N, der Firma PSL Wälzlager GmbH, ist auf Seite 13 eine solche Drehverbindung abgebildet. Diese besteht aus zwei konzentrisch ineinander angeordneten Laufringen, zwischen denen auf zugehörigen Laufbahnen in doppelter Reihe angeordnete Lagerkugeln abwälzen. Der Außenlaufring dieser Drehverbindung ist mit einer umlaufenden Verzahnung versehen, in die ein Schneckenritzel eingreift, dass über zwei voneinander beabstandete Lagerstellen in einem Gehäuse gehalten ist. Dieses Schneckenritzel ist mit einer Welle verbunden, die an einem Ende mit einem Elektromotor in Wirkverbindung steht. Wird über den Elektromotor die Welle bzw. das Schneckenritzel in Rotation versetzt, so bewegt sich der Außenring in Umfangsrichtung.

Bei dieser angetriebenen Drehverbindung ist von Nachteil, dass sowohl der Außenring als auch das Schneckenritzel aus Stahl gefertigt sind. Diese Werkstoffpaarung ist aber für ein Schneckengetriebe ungünstig, weil aufgrund des Schraubgleitens der Zähne von Schneckenritzel und Außenring insbesondere bei großen Belastungen ein hoher Verschleiß gegeben ist. Bei dieser Anordnung ist weiter von Nachteil, dass sie aufgrund des separat angeordneten Elektromotors sehr viel Bauraum beansprucht.

Aus der DE 198 14 629 A1 ist eine Anordnung zur drehbaren Lagerung der Maschinengondel einer Windkraftanlage bekannt, bei der das Drehmoment von der drehbaren Maschinengondel auf den feststehenden Turm mittels elektromotorischer Antriebe übertragen wird. Dies geschieht in der Form, dass die Antriebe mit jeweils einem Zahnritzel versehen sind, das jeweils in eine am Turm bzw. am feststehenden Lagerring der Drehverbindung angeordnete umlaufende Verzahnung eingreift, wodurch die motorische Drehung der Maschinengondel relativ zum Turm ermöglicht wird. Die vorstehend geführten Nachteile treffen auch für diese Drehverbindung zu.

Aus der deutschen Gebrauchsmusteranmeldung DE 201 15 350 U1 ist eine Drehverbindung bekannt, bei der die Kraftübertragung auf den Außenring von einem Seilelement mittels Reibschluß und/oder mittels Kraftschluß erfolgt.

Auch für diese aktive Drehverbindung gilt, dass sie aufwendig ist und viel Bauraum beansprucht.

Eine Drehverbindung, die sich dadurch auszeichnet, dass beide Laufringe über ein Innengewinde und über ein dazu passendes Außengewinde gegeneinander verdrehbar sind, geht aus der DE 201 11 648 U1 hervor. Auch hier ist die Herstellung aufwendig.

Schließlich ist es auch allgemein bekannt, dass in der Medizintechnik aktiv angetriebene Wälzlager- Drehverbindungen eingesetzt werden. Der Antrieb erfolgt dabei in aufwendiger Weise über eine Riemenscheibe, die mit einem Elektromotor verbunden ist.

EP 1 593 865 A2, die zum Stand der Technik nach Art. 54(3) EPü gehört, offenbart eine

Drehverbindung, bestehend aus zwei konzentrisch ineinander angeordneten Laufringen, wobei zur deren aktiver Drehung einer der beiden Laufringe mit einer elektromotorischen Antriebseinheit verbunden ist, wobei die elektromotorische Antriebseinheit als ein Direktantrieb in Form eines Drehmomentmotors in Segmentbauweise ausgebildet ist, wobei einer der Laufringe mit wenigstens einem, aus Eisenkernen und elektrischen Wicklungen bestehenden Statorsegment und einer der Laufringe mit Permanentmagneten verbunden ist und wobei der mit Permanentmagneten verbundene Laufring in Umfangsrichtung an mehreren voneinander beabstandeten Stellen seiner Mantelfläche über zwei in axialer Richtung voneinander beabstandet angeordnete, Wälzkörper geführt ist.

Die vorstehend beschriebene Drehverbindung ist mit einem weiteren wesentlichen Nachteil behaftet:

Dieser liegt darin, dass die Kontaktflächen der konzentrisch ineinander angeordneten Laufringe in sehr aufwendiger Weise gefertigt werden müssen. So müssen die Laufbahnen beider Laufringe, auf denen die Wälzkörper abwälzen, einer mechanischen Bearbeitung unterzogen werden. Diese aufwendige mechanische Bearbeitung trifft auch zu, wenn keine Wälzkörper verwendet sind, sondern die Kontaktflächen zwischen beiden Laufringen durch ein Innen- bzw. ein Außengewinde gebildet sind.

### Zusammenfassung der Erfindung

Der Erfindung liegt daher die Aufgabe zugrunde, eine angetriebene Drehverbindung zu schaffen, die kostengünstig und platzsparend ist.

Erfindungsgemäß wird diese Aufgabe mit den Merkmalen des Anspruchs 1 gelöst.

Ein entscheidender Vorteil der Erfindung liegt darin, dass der Drehmomentmotor integraler Bestandteil der Drehverbindung ist und daher keinen zusätzlichen Bauraum beansprucht. Dieser Direktantrieb sorgt dafür, dass die bereitgestellten Antriebskräfte ohne Zwischenschaltung von Getriebeelementen, wie beispielsweise die aufgeführten Zahnritzel oder die aufgeführten Seilelemente, auf die Drehverbindung übertragen werden. Es ist weiter von Vorteil, dass mit Hilfe des Drehmomentmotors in Segmentbauweise unterschiedliche Motoren durch Zusammenstellen einzelner Module bereitgestellt werden können, wobei deren Leistung abhängig von der Anzahl der verwendeten Statorsegmente ist. Werden nur geringe Drehzahlen und kleine Drehmomente benötigt, so können zwischen den einzelnen Statorsegmenten große Lücken gelassen werden. Der Drehmomentmotor ist auch dann noch betriebsfähig, wenn im Extremfall nur ein Statorsegment angeordnet ist. Bei hohem Leistungsbedarf zur aktiven Drehung der Drehverbindung sind dann entsprechend viele Statorsegmente in Umfangsrichtung hintereinander anzuordnen. Es ist auch von Vorteil, dass gegenüber einem gekapselten geschlossenen Ringmotor die Motorwärme schneller abführbar ist.

Ein weiterer Vorteil ergibt sich durch die erfindungsgemäße Art der Abstützung beider Laufringe zueinander. Dies hat zur Folge, dass wegen der fehlenden Wälzkörper zwischen den beiden Laufringen die zugehörigen Laufbahnen nicht in aufwendiger Art und Weise mechanisch bearbeitet werden müssen. Die dafür erforderlichen Stützrollen sind auf dem Markt als Zukaufteil in den verschiedensten Größenvariationen preisgünstig zu erwerben.

Weitere vorteilhafte Ausführungsvarianten der Erfindung sind in den Unteransprüchen 2 bis 6 beschrieben.

So ist nach Anspruch 2 vorgesehen, dass die Statorsegmente mit dem äußeren Laufring lösbar verbunden sind, wobei zwischen den Statorsegmenten die Stützrollen angeordnet sind.

Der Vorteil dieser Merkmalskombination liegt darin, dass ein defektes Statorsegment in einfacher Weise durch Lösen der Befestigungsschraube sehr schnell ausgebaut werden kann, weil es leicht zugänglich ist. Aber selbst wenn dieses defekte Statorsegment nicht ausgewechselt würde, bliebe die Drehverbindung dennoch betriebsbereit. Das gleiche, d.h., die leichte Auswechselbarkeit, trifft auch für die Stützrollen zu.

Nach einem weiteren Merkmal der Erfindung gemäß Anspruch 3 sollen die Permanentmagnete an der Mantelfläche des inneren Laufringes unlösbar, beispielsweise durch Kleben, gehalten sein.

Nach einem weiteren zusätzlichen Merkmal der Erfindung gemäß Anspruch 4 sollen die Stützrollen als beidseitig abgedichtete Kugellager ausgebildet sein, deren Lageraußenring mit einer Kunststoffummantelung versehen ist.

So könnte die Stützrolle beispielsweise als ein Vierpunkt-Kugellager ausgestaltet sein, welches die einfachste und robusteste Lagerbauform darstellt. Es ist so ausgelegt, dass mittlere Axial-, Radial- und Momentbelastungen sicher aufgenommen werden können. Die an die Anschlusskonstruktion hinsichtlich Planheit und Steifheit gestellten Anforderungen sind gering. Die maximalen Axial- und Radialspiele betragen, abhängig vom Durchmesser des Lagers und vom Durchmesser der Kugeln, 0,1 bis 0,8 mm. Die zulässige Umfangsgeschwindigkeit kann bis 4 m/sec betragen. Die Kunststoffummantelung hat zwei Funktionen. Zum einen dient sie der Geräuschminderung und damit einem besonders ruhigen Lauf der Drehverbindung und zum anderen sorgt sie dafür, dass zwischen dem Stator und dem Rotor der Drehverbindung kein Strom fließen kann.

Nach Anspruch 5 soll die Lauffläche der Kunststoffummantelung zylindrisch oder ballig ausgebildet sein. Durch die Kombination der unterschiedlichen Laufflächen ist dafür gesorgt, dass das Lager entweder als Loslager oder als Festlager ausgebildet und ein axiales Verschieben des aufgenommenen Teiles verhindert ist.

Schließlich ist nach einem letzten Merkmal der Erfindung gemäß Anspruch 6 vorgesehen, dass wenigstens der mit dem Permanentmagneten verbundene Laufring aus einem Leichtbauwerkstoff hergestellt ist. Dies kann beispielsweise Aluminium sein, das somit keiner aufwendigen Härtebearbeitung zu unterziehen ist und das darüber hinaus noch für eine Gewichtsverringerung der Gesamtkonstruktion sorgt.

Die Erfindung wird an nachstehendem Ausführungsbeispiel näher erläutert.

### Kurze Beschreibung der Zeichnungen

Es zeigen:
- Figur 1: einen Ausschnitt aus einer Draufsicht auf eine erfindungsgemäße Drehverbindung,
- Figur 2: einen Schnitt entlang der Linie II-II in Figur 1,
- Figur 3: einen Schnitt entlang der Linie III-III in Figur 1 und
- Figur 4: einen Längsschnitt durch eine Stützrolle.

### Ausführliche Beschreibung der Zeichnungen

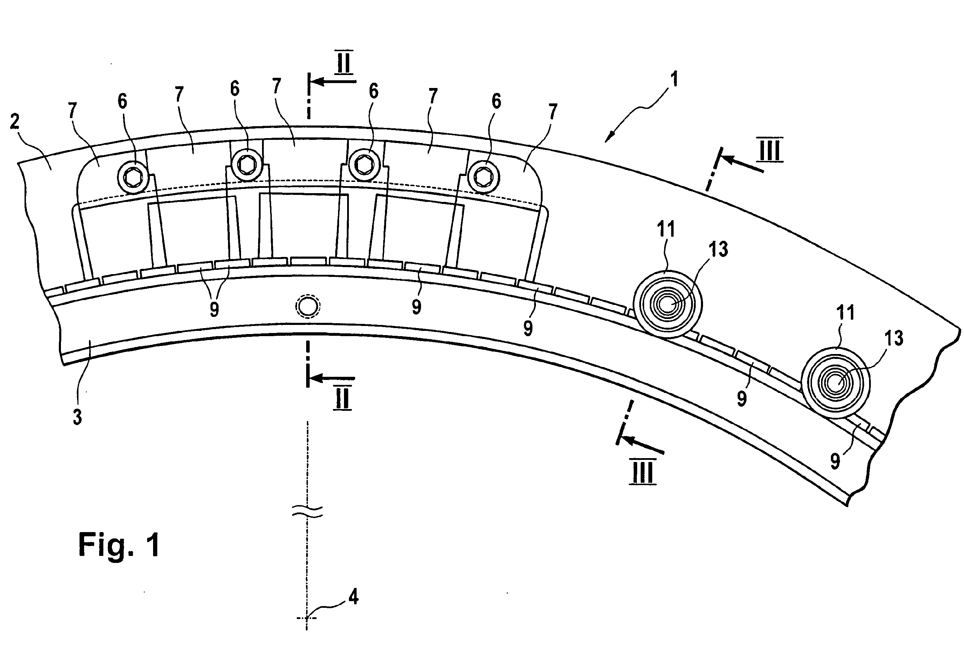

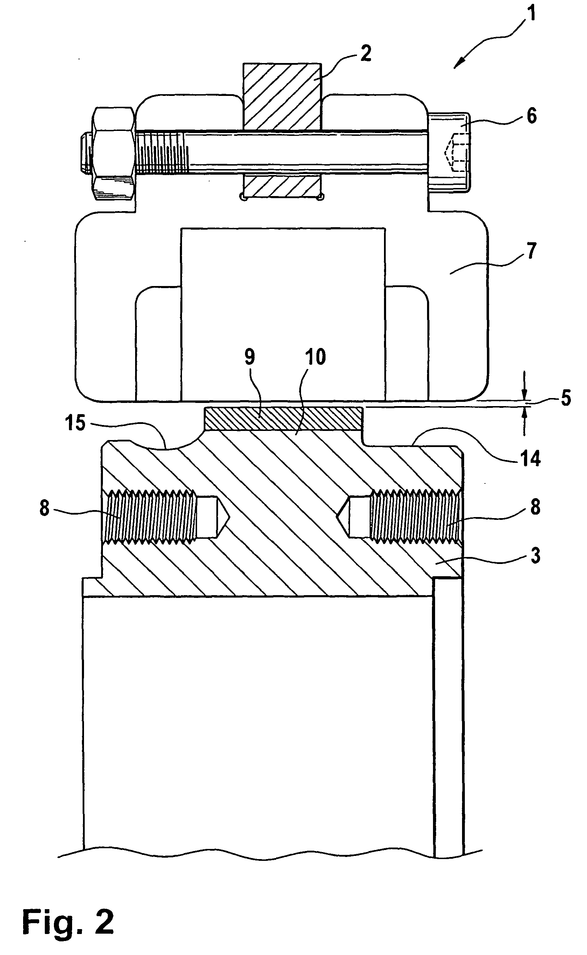

Die in den Figuren 1, 2 und 3 dargestellte Drehverbindung 1 besteht aus dem äußeren Laufring 2 und dem inneren Laufring 3, die konzentrisch ineinander angeordnet und durch den Luftspalt 5 voneinander beabstandet sind und um ihre Drehachse 4 in Umfangsrichtung gegeneinander drehbar sind. Der äußere Laufring 2 ist über Befestigungsschrauben 6 mit Statorsegmenten 7 verbunden, dreht sich also nicht, während der innere Laufring 3 um seinen Umfang mit gleichmäßig voneinander beabstandeten Permanentmagneten 9 versehen ist. Diese sind auf dem mittig angeordneten Vorsprung 10 unlösbar, beispielsweise durch Kleben, mit dem inneren Laufring 3 verbunden. Insbesondere Figur 2 läßt erkennen, dass die Statorsegmente 7 mittels der Befestigungsschrauben 6 ohne großen Aufwand am äußeren Laufring 2 mon- und demontierbar sind. Auf diese Weise ist sichergestellt, dass durch die Verwendung einer unterschiedlichen Anzahl von Statorsegmenten 7 die Antriebsleistung je nach Bedarf stufenweise angehoben werden kann. Der als Rotor wirkende innere Laufring 3 ist mit Aufnahmebohrungen 8 versehen, so dass ebenfalls in einfacher Weise erforderliche Ausrüstungsgegenstände mit diesem verbindbar sind.

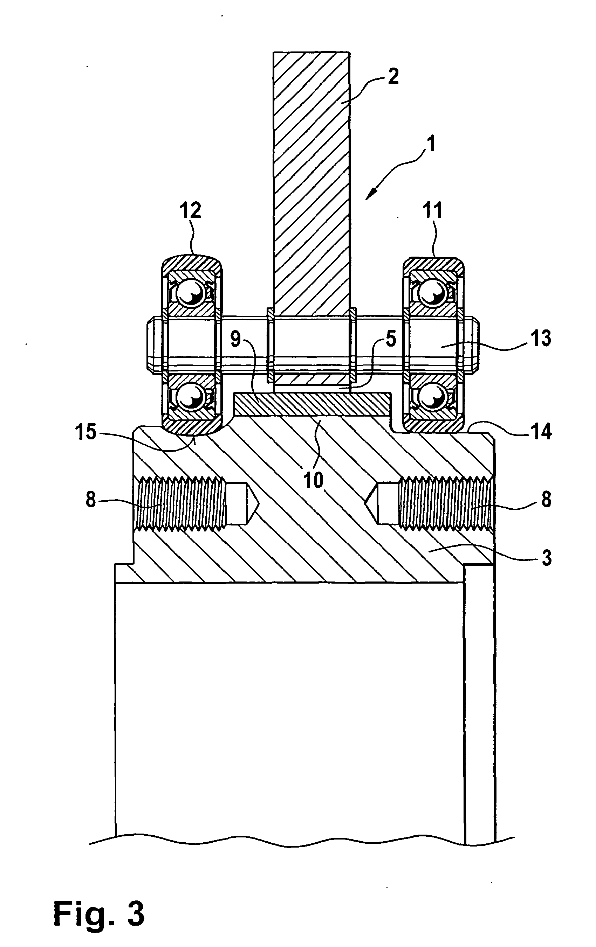

Wie insbesondere Figur 3 zeigt, ist der innere Laufring 3 an mehreren gleichmäßig voneinander beabstandeten Stellen seiner Mantelfläche von Stützrollen 11, 12 aufgenommen, die über die gemeinsame Tragachse 13 mit dem äußeren Laufring 2 verbunden sind. Die Tragachse 13 verläuft achsparallel zur Drehachse 4 der Drehverbindung 1. Während die rechtsseitig angeordnete Stützrolle 11 auf einer zylindrischen Laufbahn 14 auf dem inneren Laufring 3 abrollt, rollt die linksseitig angeordnete Stützrolle 12 auf einer hohlkugeligen Laufbahn 15 ab. Dadurch wirkt die linke Stützrolle 12 als Festlager, sorgt also dafür, dass der innere Laufring 3 sich nur sehr begrenzt in axialer Richtung verschieben kann, während die rechtsseitig angeordnete Stützrolle 11 als Loslager wirkt.

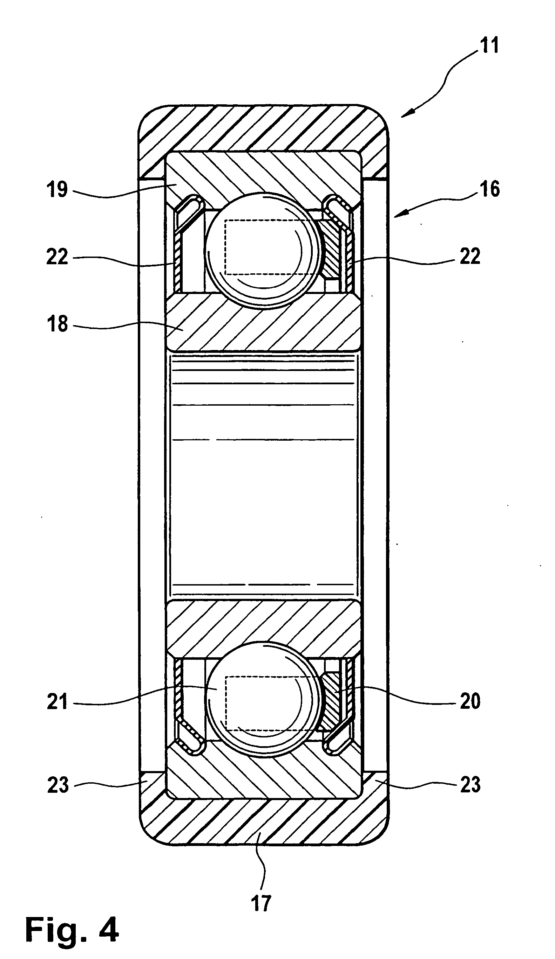

Die in Figur 4 gezeigte Stützrolle 11 setzt sich aus dem Kugellager 16 und der Ummantelung 17 zusammen. Das Kugellager 16 besteht aus dem Lagerinnenring 18, dem Lageraußenring 19 und den im Käfig 20 geführten Lagerkugeln 21, die auf nicht näher bezeichneten rillenförmig gestalteten Laufbahnen abwälzen. Nach außen ist das Kugellager 16 beidseitig durch Dichtringe 22 geschützt. Der Außenring 19 ist von der Kunststoffummantelung 17 fest umschlossen, wobei diese zu einem sicheren Halt beidseitig mit radial nach innen gerichteten Schenkeln 23 versehen ist, die die Stirnfläche des Außenringes 19 teilweise radial überdecken.

Eine vorstehend beschriebene direkt angetriebene Drehverbindung lässt sich anstelle klassischer Drehverbindungen beispielsweise vorteilhaft in einem Gepäckscanner einsetzen, wobei eine mit dem Rotor verbundene Röntgenröhre geräuscharm um das zu prüfende Gepäckstück rotiert. Die wälzgelagerten Stützrollen 11, 12 gewährleisten eine wartungsfreie Lagerung, wobei der Segmentmotor kein zusätzliches Kippmoment auf den Rotor ausübt. Der Rotor ist aus Aluminium gefertigt und wirkt sich vorteilhaft auf Gewicht, Massenträgheitsmoment und Motordrehmoment aus. Auch ist die erfindungsgemäße Lösung sehr reparaturfreundlich, da Stützrollen 11, 12 und Statorsegmente 7 in einfacher Weise austauschbar sind.

### Bezugszeichen

- 1: Drehverbindung
- 2: äußerer Laufring
- 3: innerer Laufring
- 4: Drehachse
- 5: Luftspalt
- 6: Befestigungsschraube
- 7: Statorsegment
- 8: Aufnahmebohrung
- 9: Permanentmagnet
- 10: Vorsprung
- 11: Stützrolle
- 12: Stützrolle
- 13: Tragachse
- 14: zylindrische Laufbahn
- 15: hohlkugelige Laufbahn
- 16: Kugellager
- 17: Ummantelung
- 18: Lagerinnenring
- 19: Lageraußenring
- 20: Käfig
- 21: Lagerkugel
- 22: Dichtring
- 23: Schenkel

## Patentansprüche

1. Drehverbindung (1), bestehend aus zwei konzentrisch ineinander angeordneten Laufringen (2,3), wobei zur deren aktiver Drehung einer der beiden Laufringe (2,3) mit einer elektromotorischen Antriebseinheit verbunden ist, wobei die elektromotorische Antriebseinheit als ein Direktantrieb in Form eines Drehmomentmotors in Segmentbauweise ausgebildet ist, wobei einer der Laufringe (2,3) mit wenigstens einem, aus Eisenkernen und elektrischen Wicklungen bestehenden Statorsegment (7) und einer der Laufringe (3,2) mit Permanentmagneten (9) verbunden ist und wobei der mit Permanentmagneten (9) verbundene Laufring (3,2) in Umfangsrichtung an mehreren voneinander beabstandeten Stellen seiner Mantelfläche über zwei in axialer Richtung voneinander beabstandet angeordnete, wälzgelagerte Stützrollen (11,12) geführt ist, deren gemeinsame Tragachse (13) achsparallel zur Drehachse (4) der Drehverbindung (1) verläuft und im anderen Laufring (2,3) angeordnet ist.

2. Drehverbindung (1) nach Anspruch 1, wobei die Statorsegmente (7) mit dem äußeren Laufring (2) lösbar verbunden sind, wobei zwischen den Statorsegmenten (7) die Stützrollen (11, 12) angeordnet sind.

3. Drehverbindung (1) nach Anspruch 1, wobei die Permanentmagnete (9) an der Mantelfläche des inneren Laufringes (3) unlösbar, beispielsweise durch Kleben, gehalten sind.

4. Drehverbindung (1) nach Anspruch 1, wobei die Stützrollen (11,12) als beidseitig abgedichtete Kugellager (16) ausgebildet sind, deren Lageraußenring (19) mit einer Kunststoffummantelung (17) versehen ist.

5. Drehverbindung (1) nach Anspruch 4, wobei die Lauffläche der Kunststoffummantelung (17) zylindrisch oder ballig ausgebildet ist.

6. Drehverbindung (1) nach einem der vorstehenden Ansprüche, wobei wenigstens der mit dem Permanentmagneten (9) verbundene Laufring (3) aus einem Leichtbauwerkstoff hergestellt ist.

## Claims

1. Rotary connection (1), comprising two races (2, 3) which are arranged concentrically one in the other, with one of the two races (2, 3) being connected to an electromotive drive unit in order to actively rotate the said rotary connection, with the electromotive drive unit being formed as a direct drive in the form of a torque motor of segmented structure, with one of the races (2, 3) being connected to at least one stator segment (7) which comprises iron cores and electrical windings, and one of the races (3, 2) being connected to permanent magnets (9), and with the race (3, 2) which is connected to permanent magnets (9) being guided in the circumferential direction at a plurality of points, which are spaced apart from one another, on its lateral surface by means of two supporting rollers (11, 12) which are mounted on roller bearings, are arranged at a distance from one another in the axial direction and whose common bearing shaft (13) runs axially parallel to the rotary shaft (4) of the rotary connection (1) and is arranged in the other race (2, 3).

2. Rotary connection (1) according to Claim 1, with the stator segments (7) being detachably connected to the outer race (2), with the supporting rollers (11, 12) being arranged between the stator segments (7).

3. Rotary connection (1) according to Claim 1, with the permanent magnets (9) being non-detachably held, for example by adhesive bonding, on the lateral surface of the inner race (3).

4. Rotary connection (1) according to Claim 1, with the supporting rollers (11, 12) being formed as ball bearings (16) which are sealed off on both sides and whose bearing outer ring (19) is provided with a plastic casing (17).

5. Rotary connection (1) according to Claim 4, with the running surface of the plastic casing (17) being cylindrical or spherical.

6. Rotary connection (1) according to one of the preceding claims, with at least the race (3) which is connected to the permanent magnet (9) being produced from a lightweight material.

## Revendications

1. Joint tournant (1), comprenant deux bagues de roulement (2, 3) disposées l'une dans l'autre de façon concentrique, l'une des deux bagues de roulement (2, 3) étant reliée à une unité d'entraînement par moteur électrique pour leur rotation active, l'unité d'entraînement par moteur électrique étant réalisée comme un entraînement direct sous la forme d'un moteur-couple dans une conception à segment, l'une des bagues de roulement (2, 3) étant reliée. à au moins un segment de stator (7) constitué de noyaux de fer et d'enroulements électriques et l'une des bagues de roulement (3, 2) étant reliée à des aimants permanents (9) et la bague de roulement (3, 2) reliée à des aimants permanents (9) étant guidée dans le sens périphérique en plusieurs emplacements espacés les uns des autres de sa surface d'enveloppe au moyen de deux galets de soutien (11, 12) montés sur roulement et disposés à distance l'un de l'autre dans le sens axial, galets dont l'axe porteur (13) commun s'étend parallèlement à l'axe de rotation (4) du joint tournant (1) et est disposé dans l'autre bague de roulement (2, 3).

2. Joint tournant (1) selon la revendication 1, les segments de stator (7) étant reliés de façon amovible avec la bague de roulement (2) extérieure, les galets de soutien (11, 12) étant disposés entre les segments de stator (7).

3. Joint tournant (1) selon la revendication 1, les aimants permanents (9) étant maintenus sur la surface d'enveloppe de la bague de roulement (3) intérieure de façon inamovible, par exemple par collage.

4. Joint tournant (1) selon la revendication 1, les galets de soutien (11, 12) étant réalisés sous forme de roulements à billes (16) étanchéifiés des deux côtés, dont la bague extérieure de palier (19) est dotée d'une enveloppe en matière synthétique (17).

5. Joint tournant (1) selon la revendication 4, la surface de roulement de l'enveloppe en matière synthétique (17) étant conçue cylindrique ou bombée.

6. Joint tournant (1) selon l'une quelconque des revendications précédentes, au moins la bague de roulement (3) reliée à l'aimant permanent (9) étant fabriquée dans un matériau de construction allégé.
